# EUROPÄISCHE PATENTSCHRIFT

(11) **EP 1 262 263 B1**
(45) Veröffentlichungstag und Bekanntmachung des Hinweises auf die Patenterteilung: **12.05.2004**
(21) Anmeldenummer: 02004137.2
(22) Anmeldetag: 25.02.2002
(51) Int. Cl.: B23B 29/02, B23B 29/034

(54) **Bohrstangeneinheit**
Boring rod unit
Unité de forage par tige

(30) Priorität: 30.05.2001 DE 10126543
(43) Veröffentlichungstag der Anmeldung: 04.12.2002
(73) Patentinhaber: Ex-Cell-O GmbH, 73054 Eislingen (DE)
(72) Erfinder: Schmid, Martin, 73230 Kirchheim/Teck (DE)
(74) Vertreter: Winter, Brandl, Fürniss, Hübner, Röss, Kaiser, Polte, Partnerschaft

(56) Entgegenhaltungen:
- WO-A-98/41350
- DE-A- 3 737 746
- US-A- 3 018 675

## Beschreibung

Die Erfindung betrifft eine Bohrstangeneinheit zum Bearbeiten von axial hintereinander liegenden Ausnehmungen, beispielsweise Bohrungen und Lagerabschnitte gemäß dem Oberbegriff des Patentanspruchs 1 und Verfahren zum Ansteuern dieser Bohrstangeneinheit gemäß den Patentansprüchen 16, 17 bzw. 18.

Ein Einsatzgebiet derartiger Bohrstangeneinheiten ist beispielsweise die Bearbeitung von Kurbelgehäusen. Diese Gehäuse haben eine Lagergasse, die von axial hintereinander liegenden Lagerabschnitten gebildet wird. In Abhängigkeit von der Kurbelwellenlänge erstrecken sich die Lagerabschnitte über eine erhebliche Axiallänge, so daß zum Ausbilden derselben in fertigungstechnische Hinsicht hohe Anforderungen gestellt werden.

Eine Vorrichtung zur Bearbeitung derartiger Lagerungsabschnitte beschreibt die Druckschrift WO 98/41350. Die dort offenbarte Werkzeugmaschine verfügt über eine frei auskragende mit Schneiden versehene Bohrstange, die an einen Gegenhalter ankoppelbar ist. Dabei wird die Bohrstange über den Gegenhalter derart geführt, daß Radialauslenkungen reduziert werden. Die Bohrstange hat eine optimal nachstellbare Fertigschneide zur Endbearbeitung und eine Schruppschneide zur Vorbearbeitung. Durch die Reduzierung der Radialauslenkungen der Bohrstange können Kurbelgehäuse mit engeren Toleranzabmessungen bzgl. der Lagerungsabschnitte gefertigt werden, was sich nicht nur positiv auf den späteren Betrieb, sondern ebenfalls vorteilhaft auf die Schneiden auswirkt, deren Standzeit durch eine genaue axiale Führung verlängert wird.

Schwerspanende Werkstoffe wie zum Beispiel GGV und Bimetall bedingen jedoch aufgrund der geringeren Schnittwerte eine geänderte Spanaufteilung. In den herkömmlichen Lösungen lassen sich die Taktzeiten durch Erhöhung der Vorschubgeschwindigkeit nicht verkürzen, da dann die Schneiden höheren Verschleiß unterworfen sind und so häufige Werkzeugwechsel erforderlich werden.

Demgegenüber liegt der Erfindung die Aufgabe zugrunde, eine Bohrstangeneinheit und Verfahren zum Bearbeiten von axial hintereinander liegenden Bohrungen, z.B. Lagerabschnitte einer Lagergasse, zu schaffen durch die auch bei schwer zerspanbaren Werkstoffen eine minimale Taktzeit möglich ist.

Diese Aufgabe wird hinsichtlich der Bohrstangeneinheit durch die Merkmale des Patentanspruchs 1 und hinsichtlich der Verfahren durch die Patentansprüche 16, 17 bzw. 18 gelöst.

Erfindungsgemäß verfügt die Bohrstangeneinheit über zwei mitteinander koppelbare Bohrstangen, von der zumindest eine mit einer Schrupp-, einer Zwischen- und einer Fertgischneide versehen ist.

Der Begriff Bohrstange bezieht sich ebenfalls auf eine Stützstange, die keine Schneiden trägt und daher lediglich als Gegenhalter zur Reduzierung der radialen Bewegungen der Schneiden tragenden Bohrstange eingesetzt wird.

Entsprechend der Spantiefe der Schneiden wird zwischen Schrupp- (Vorbearbeitung, Schruppen), Zwischen- (Zwischenbearbeiung, Vorschlichten), Fertigschneiden (Endbearbeitung, Endschlichten) unterschieden, wobei die Spantiefe von der Schruppschneide zur Fertigschneide abnimmt. Zumindest die Fertigschneide ist über einen Zustellmachanismus während der Bearbeitung in Radialrichtung zustellbar. Somit kann die Fertigschneide radial nach innen, d. h. eingesteuert, und radial nach außen, d. h. ausgesteuert, werden. Der Spanabtrag erfolgt dabei im ausgesteuerten Zustand.

Erfindungsgemäß lassen sich drei Ausführungsformen der Bohrstangeneinheit unterscheiden. Je nach Ausführungsform eignet sich ein Grundverfahren zur Ansteuerung der Bohrstangeneinheit besonders.

Bei einer ersten bevorzugten Ausführungsform sind auf einer ersten Bohrstange zumindest eine Schrupp-, Zwischen- und Fertigschneide angeordnet. Eine zweite Bohrstange verfügt über keine Schneiden, so daß diese lediglich als Gegenhalter zur Unterdrückung der störende Radialbewegungen der ersten Bohrstange eingesetzt wird.

Die zweite Bohrstange fährt in die Lagergasse ein und koppelt auf der gegenüberliegenden Seite an der ersten Bohrstange an. Anschließend fährt die zweite Bohrstange zurück, wobei durch die Mitnahme der ersten Bohrstange die Lagerabschnitte vorwärts bearbeitet werden.

Bei einer zweiten und dritten vorteilhaften Ausführungsform sind auf beiden Bohrstangen Schneiden angeordnet, so daß eine Lagergasse zeitgleich durch beide Bohrstangen bearbeitbar ist. Dabei sind die Schneiden zumindest einer Bohrstange derart im Axialabstand zu einer Kupplung zwischen den Bohrstangen ausgebildet, daß diese Bohrstange in die Lagergasse einfahren kann, ohne daß sich ihre Schneiden im Eingriff befinden.

Die zweite Ausführungsform sieht vor, auf einer ersten Bohrstange mindestens eine Schrupp- und Fertigschneide und auf einer zweiten Bohrstange zumindest eine Schrupp-, Zwischen- und Fertigschneide anzuordnen. Die Schneiden der zweiten Bohrstange sind in einem gewissen Abstand von der Kupplung ausgebildet.

Die erste Bohrstange fährt mit eingesteuerter Fertigschneide in eine Lagergasse ein, so daß sich nur die Schruppschneide im Eingriff befindet. Sobald innerhalb der Lagergasse Kupplungskontakt mit der zweiten Bohrstange, deren Schneiden sich noch außerhalb der Lagergasse befinden, hergestellt ist, fährt die erste Bohrstange mit ausgesteuerter Fertigschneide zurück, so daß die bereits vorbearbeiteten Lagerabschnitte endbearbeitet werden. Durch den Kupplungskontakt wird die zweite Bohrstange mitgeführt, wodurch die übrigen Lagerabschnitte bearbeitet werden.

Bei der dritten Ausführungsform werden beiden Bohrstangen mindestens eine Schrupp-, Zwischen- und Fertigschneide zugeordnet, wobei sich die Schneiden beider Bohrstangen in einem entsprechenden Axialabstand von der Kupplung befinden. Die Schneiden der zweiten Bohrstange sind in Radialrichtung zustellbar.

Die zweite Bohrstange fährt mit eingesteuerten Schneiden soweit in die Lagergasse ein, bis die Kupplung mit der gegenüberliegenden Lagergassenseite fluchtend abschließt. Nach dem erfolgten Kupplungskontakt mit der ersten Bohrstange fährt die zweite Bohrstange zurück, so daß demgemäß die von ihren Schneiden durchfahrenen Lagerabschnitte bearbeitet werden. Die erste Bohrstange wird entsprechend mitgeführt, so daß die übrigen Lagerabschnitte bearbeitet werden.

Sonstige vorteihalfte Ausführungsformen der Erfindung sind Gegenstand der weiteren Unteransprüche.

Im Folgenden werden bevorzugte Ausführungsbeispiele der Erfindung anhand schematischer Darstellungen näher erläutert. Es zeigen:
Figur 1 eine schematische Ansicht einer bevorzugten Bohrstangeneinheit zur Bearbeitung von axial hintereinander liegenden Lagerabschnitten mit Schneiden auf einer Bohrstange;
Figur 2 eine schematische Ansicht einer vorteilhafte Alternative zu Figur 1 mit Schneiden auf beiden Bohrstangen und
Figur 3 eine schematische Ansicht einer vorteihaften Alternative zu Figur 2 mit Schneiden auf beiden Bohrstangen.

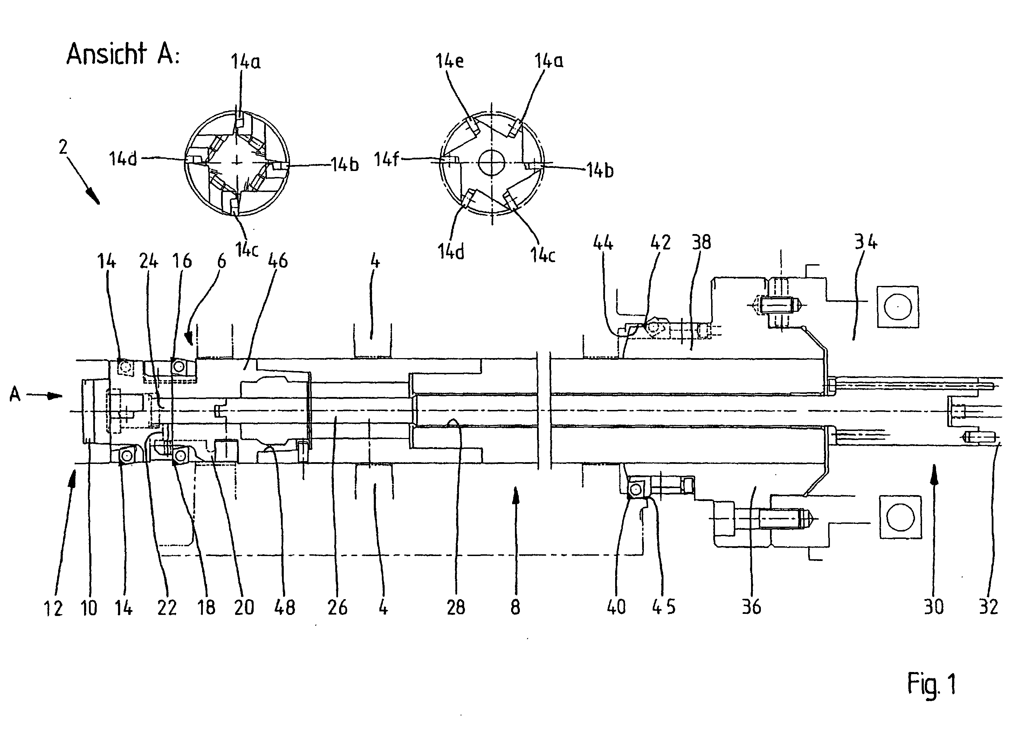

In Figur 1 ist eine schematische Ansicht einer Bohrstangeneinheit 2 zur Bearbeitung von axial hintereinander liegenden Lagerabschnitten 4, bspw. einer Lagergasse 6 eines Kurbelwellengehäuses, dargestellt. Die Bohrstangeneinheit 2 hat eine erste Bohrstange 8, die über eine Kupplung 10 stirnseitig mit einem Gegenhalter, im Folgenden zweite Bohrstange 12 genannt, koppelbar ist. Diese Bohrstangen 8, 12 werden jeweils über eine auf einem Vorschubschlitten montierte Spindel angetrieben, so daß die Bohrstangen 8, 12 synchron in Axialrichtung bewegbar und mit gleicher Drehzahl antreibbar sind. Hinsichtlich weiterer Einzelheiten des Aufbaus der Werkzeugmaschine sei der Einfachheit halber auf die WO 98/41305 A1 der Anmelderin verwiesen.

Bei dem in Figur 1 dargestellten Ausführungsbeispiel sind an der zweiten Bohrstange 12, d.h. dem Gegenhalter, keine Schneiden ausgebildet. Die Bohrstange 8 hat an ihrem vorderen, zur Kupplung 10 benachbarten Endabschnitt eine Vielzahl von Schruppschneiden 14, eine in Axialrichtung zu den Schruppschneiden 14 beabstandete Zwischenschneide 16 und eine Fertigschneide 18, die in der Darstellung gemäß Figur 1 gegenüber der Zwischenschneide 14 um etwa 0,5 mm nach rechts (Ansicht nach Figur 1) versetzt ist.

Gemäß der in Figur 1 dargestellten Ansicht A können bspw. vier oder sechs Schruppschneiden 14 a bis 14 f am Umfang der Bohrstange 8 verteilt werden.

Über die Schruppschneiden 14 erfolgt eine Vorbearbeitung der Lagerabschnitte 4, die Zwischenschneide 16 ist so ausgeführt, daß die Schnitttiefe zur Schruppschneide 14 etwa 0,1 bis 0,125 mm beträgt. Die Schnitttiefe der Fertigschneide 18 beträgt etwa 0,025 bis 0,05 mm zur Zwischenschneide 16.

Bei dem dargestellten Ausführungsbeispiel ist die Fertigschneide 18 in Radialrichtung verstellbar ausgeführt, so daß während des Bearbeitungsvorganges eine Kompensation möglich ist. Hierzu ist die Fertigschneide 18 auf einem Biegeklemmhalter 20 gelagert, der am Außenumfang der ersten Bohrstange 8 befestigt ist. Die Radialauslenkung des Biegeklemmhalters 20 erfolgt über einen in Radialrichtung verschiebbaren in der ersten Bohrstange 8 geführten Stift 22, der auf einer Steuerfläche 24 einer Innenwelle 26 abgestützt ist. Diese Innenwelle 26 ist in einer Axialbohrung 28 der ersten Bohrstange 8 geführt und über eine Kupplungseinrichtung 30 mit einer Innenspindel 32 der Spindelanordnung zum Antreiben der Bohrstange 8 verbunden. Die erste Bohrstange 8 ist drehfest mit einer Außenspindel 34 in der Spindelanordnung verbunden.

Die erste Bohrstange 8 hat im Kupplungsbereich an die Spindelanordnung einen radial erweiterten Bund 36, der mit einem flanschartigen Abschnitt an der Außenspindel 34 befestigt ist und einen gegenüber dem flanschartigen Abschnitt radial zurückgesetzten nabenförmigen Abschnitt 38, an dem zwei weitere Werkzeugschneiden 40, 42 vorgesehen sind. Über die Werkzeugschneide 40 erfolgt eine Bearbeitung einer Ringschulter 44, während mit der Werkzeugschneide 42 eine Fase 45 ausgebildet wird. Diese zusätzlichen Werkzeugschneiden 40, 42 gelangen erst dann in Eingriff, wenn sämtliche Lagerabschnitte 4 durch die eingangs beschriebenen Schneiden 14, 16, 18 bearbeitet sind.

Bei dem in Figur 1 dargestellten Ausführungsbeispiel ist ein die Schneiden 14, 16, 18, die Kupplung 10 und den Stift 22 aufnehmender Teil als Auswechselstück 46 ausgeführt, das in eine Aufnahme 48 der Bohrstange 8 einsetzbar ist. Auch die Steuerfläche 24 ist an einem auswechselbaren Abschnitt ausgebildet, der drehfest mit der Innenwelle 26 verbunden ist. Durch Auswechseln dieser Bauelemente kann die erste Bohrstange 8 auf einfache Weise an unterschiedliche Axiallängen und Geometrien der Lagergasse 6 angepaßt werden.

Zu Beginn der Bearbeitung einer Lagergasse 6 befinden sich die Schruppschneiden 14 in der Darstellung gemäß Figur 1 rechts von dem ersten zu bearbeitenden Lagerabschnitt 4. Die zweite Bohrstange 12 fährt in die Lagergasse 6 ein und koppelt an der ersten Bohrstange 8 an, so daß diese in Radialrichtung abgestützt ist. Die Antriebe werden synchronisiert und die zweite Bohrstange 12 zurück- bzw. die erste Bohrstange 8 in die Lagergasse 6 eingefahren. Entsprechend gelangen die Schruppschneiden 14, die Zwischenschneide 16 und die radial verstellbare Fertigschneide 18 aufeinander folgend bei den Lagerabschnitten 4 in Eingriff. Durch die Spanaufteilung kann die Standzeit der Fertigschneide 18 gegenüber herkömmlichen Lösungen wesentlich erhöht und ein höherer Axialvorschub eingestellt werden, so daß dementsprechend die Taktzeit reduziert ist. Die Fertigschneide 18 muß dabei nur eine minimale Spantiefe zerspanen, so daß eine hochpräzise Fertigung möglich ist. Nach oder während der Bearbeitung des letzten Lagerabschnittes 4 gelangen die zusätzlichen Werkzeugschneiden 40, 42 in Eingriff, so daß die Ringschulter 44 und die Fase 45 bearbeitet werden.

Während dieser Bearbeitung werden die Innenspindel 32 und die Außenspindel 34 synchron zueinander angetrieben, so daß die Drehwinkelposition zwischen Innenwelle 26 und Bohrstange 8 unverändert bleibt. Zur Radialverstellung der Fertigschneide 18 wird eine Drehzahldifferenz zwischen Innenspindel 32 und Außenspindel 34 eingestellt, so daß die Steuerfläche 24 gegenüber der Bohrstange 8 verdreht und der Stift 22 in Radialrichtung verschoben wird. Durch diese Radialverschiebung des Stiftes 22 wird der Biegeklemmhalter 20 entsprechend ausgelenkt und die Radialposition der Fertigschneide 18 verstellt. Nach erfolgter Verstellung werden Innenspindel 32 und Außenspindel 34 wieder mit gleicher Drehzahl angetrieben. Nach der Endbearbeitung der Lagerabschnitte 4 und der stirnseitigen Bereiche wird die Fertigschneide 18 eingesteuert, d.h. radial nach innen bewegt, die Kupplung 10 zwischen den Bohrstangen 8, 12 gelöst und die erste Bohrstange 8 in der Darstellung gemäß Figur 1 nach rechts aus der Lagergasse herausgefahren - ein nächster Bearbeitungszyklus kann beginnen.

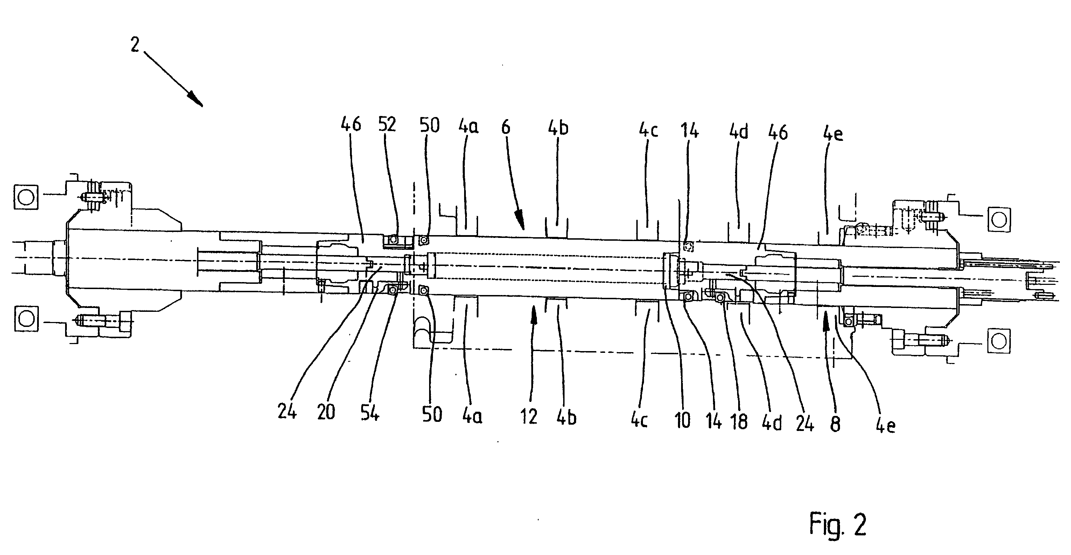

In Figur 2 ist ebenfalls eine schematische Ansicht einer Bohrstangeneinheit 2 zur Bearbeitung von axial hintereinander liegenden Lagerabschnitten 4, bspw. einer Lagergasse 6 eines Kurbelwellengehäuses, dargestellt. Jedoch sind bei dieser Ausführungsform der Bohrstangeneinheit 2 auf beiden Bohrstangen 8, 12 Schneiden 14, 18, 50, 52, 54 ausgebildet.

Aufgrund der erfindungsgemäßen Parallen zwischen der vorbeschriebenen Ausführungsform und dieser Variante im Aufbau und Antrieb der Bohrstangen 8, 12, wird nur auf die entscheidenden Unterschiede, nämlich auf die Ausführungsform spezifische Anzahl und Ausrichtung der Schneiden 14, 18, 50, 52, 54 bzgl. ihrer Bearbeitungsrichtung und ein sich dafür besonders geeignetes Bearbeitungsverfahren erläutert. Die Reihenfolge, in der sich die Schneiden 14, 18, 50, 52, 54 auf den Bohrstangen 8, 12 im Eingriff befinden, bzw. der gegenseitige Axialabstand und die Spantiefen ändern sich zu dem Ausführungsbeispiel in Figur 1 nicht. Dies betrifft auch die Lagerung und Zustellbarkeit der Fertigschneiden 18, 54 in Radialrichtung.

Die erste Bohrstange 8 hat in ihrem benachbarten Endabschnitt zur Kupplung 10 auf einem Auswechselstück 46 vorzugsweise vier Schruppschneiden 14 und eine Fertigschneide 18. Dabei ist die Fertigschneide 18 derart auf der Bohrstange 8 ausgerichtet, daß eine Endbearbeitung der Lagerabschnitte 4d, 4e nur möglich ist, wenn die erste Bohrstange 8 gemäß der Darstellung in der Figur 2 aus der Lagergasse 6 nach rechts herausfährt.

Die zweite Bohrstange 12 verfügt vorzugsweise über vier Schruppschneiden 50, eine Zwischenschneide 52 und eine Fertigschneide 54 auf einem Auswechselstück 46. Die Schneiden 50, 52, 54 sind derart in einem Axialabstand von der Kupplung 10 entfernt ausgebildet, daß die Bohrstange 12 mit ihrer Kupplung 10 zahlreiche Lagerabschnitte 4 durchfahren kann, ohne daß sich die Schneiden 50, 52, 54 innerhalb der Lagergasse 6 befinden. In dieser Ausprägungsform ist der Axialabstand so gewählt, daß die Kupplung 10 der zweiten Bohrstange 12 drei Lagerabschnitte 4 durchfahren kann und sich die Schneiden 50, 52, 54 noch außerhalb der Lagergasse 6 befinden.

Zu Beginn der Bearbeitung einer Lagergasse 6 befinden sich die Schneiden 14, 18, 50, 52, 54 außerhalb der Lagerabschnitte 4, wobei die Fertigschneiden 18, 54 eingesteuert sind. Die Bohrstangen 8, 12 fahren bis zum gegenseitigen Kupplungskontakt in die Lagergasse ein, so daß durch das Einfahren der ersten Bohrstange 8 bereits eine fliegende Vorbearbeitung der Lagerabschnitte 4e, 4d durch die Schruppschneiden 14 sowie eine Bearbeitung der Ringschulter 44 und der Fase 45 durch die Werkzeugschneiden 40, 42 erfolgt. Die Schneiden 50, 52, 54 der zweiten Bohrstange 12 befinden sich noch außerhalb der Lagergasse 6. Die Antriebe werden synchronisiert und die Fertigschneiden 18, 54 über eine kurzzeitige Drehzahldifferenz der Innenspindel 32 zur Außenspindel 34 ausgesteuert, d. h. radial nach außen bewegt. Diese Austeuerung erfolgt analog den Ausführungen zur Einsteuerung in Figur 1. Anschließend wird die erste Bohrstange 8 zurück- und entsprechend die zweite Bohrstange 12 in die Lagergasse 6 eingefahren, so daß die Lagerabschnitte 4d, 4e zeitgleich mit den Lagerabschnitten 4a, 4b bearbeitet werden. Die Bearbeitung des mittleren Lagerabschnitts 4c erfolgt durch die Schneiden 50, 52, 54 der zweiten Bohrstange 12. Nach erfolgter Endbearbeitung sämtlicher Lagerabschnitte 4 werden die Fertigschneiden 18, 54 eingesteuert, die Kupplung 10 gelöst und die zweite Bohrstange 12 in der Darstellung gemäß Figur 1 nach links aus der Lagergasse 6 herausgefahren - ein neuer Bearbeitungszyklus kann beginnen.

Die Ausprägungsform und das Verfahren nach Figur 2 eignen sich besonders für Werkstoffe wie zum Beispiel GGV, die mit niedrigen Schnittgeschwindigkeiten bearbeitet werden müssen. Da niedrige Schnittgeschwindigkeiten in hohen Taktzeiten resultieren, ist es vorteilhaft, die Lagergasse von beiden zugänglichen Seiten zeitgleich zu bearbeiten, um so die Taktzeit zu senken. Dabei hat sich als vorteilhaft herausgestellt, wenn bei einem 4 Zylinder Kurbelwellengehäuse ein Verhältnis von 2/3, d. h. die Schneiden 14, 18 der ersten Bohrstange 8 bearbeiten zwei und die Schneiden 50, 52, 54 der zweiten Bohrstange 12 drei Lagerabschnitte 4. Entspechend wird bei einem 5 Zylinder Kurbelwellengehäuse ein Verhältnis von 3/3 gewählt, wodurch die Taktzeit um 50 % gegenüber einer einseitigen Bearbeitung gemäß Figur 1 reduziert werden kann.

Des Weiteren treten durch die Reduzierung der Lagerabschnitte 4 pro Schneide 14, 18, 50, 52, 54 weniger Stillstandszeiten der Bohrstangeneinheit 2 auf, da der häufige Wechsel der Schneiden 14, 18, 50, 52, 54 entfällt. Folglich fallen seltener Rüstvorgänge an, wodurch die Verfügbarkeit der Bohrstangeneinheit 2 steigt. Die Verfügbarkeit läßt sich weiter erhöhen, wenn ebenfalls auf der ersten Bohrstange 8 eine Zwischenschneide 16 ausgebildet ist, da dann auch an der Fertigschneide 18 geringere Kräfte auftreten und folglich eine Standzeitverlängerung erzielt wird.

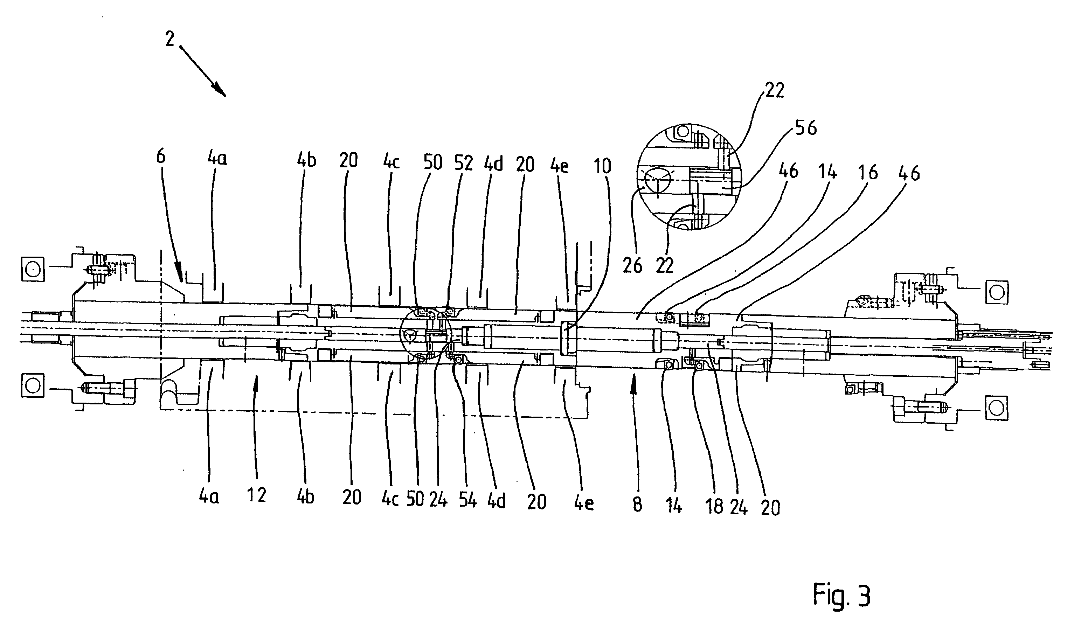

In Figur 3 ist wie in den Figuren 1 und 2 eine schematische Ansicht einer Bohrstangeneinheit 2 zur Bearbeitung von axial hintereinander liegenden Lagerabschnitten 4, bspw. einer Lagergasse 6 eines Kurbelwellengehäuses, dargestellt. Im Unterschied zur Figur 1 bzw. in Anlehnung an Figur 2 sind bei dieser Variante auf beiden Bohrstangen 8, 12 Schneiden 14, 16, 18, 50, 52, 54 ausgebildet.

Bzgl. dem Aufbau und Antrieb der Bohrstangen 8, 12 sowie dem gegenseitigen Axialabstand und die Spantiefen der Schneiden 14, 16, 18, 50, 52, 54 ist auf die Erläuterungen in Figur 1 bzw. 2 verwiesen. Die Zustellbarkeit der Fertigschneiden 18, 54 in Radialrichtung ist enstprechend diesen vorhergehenden Erläuterungen.

An der ersten Bohrstange 8 sind vorzugsweise drei Schruppschneiden 14, eine Zwischenschneide 16 und eine Fertigschneide 18 ausgebildet. Dabei befinden sich die Schneiden 14, 16, 18 in einem derartigen Axialabstand von der Kupplung 10 auf einem Auswechselstück 46, daß die Kupplung 10 zwei Lagerabschnitte 4 durchfahren kann, während sich die Schneiden 14, 16, 18 noch außerhalb der Lagergasse 6 befinden.

Auf der zweiten Bohrstange 12 sind drei Schruppschneiden 50, eine Zwischenschneide 52 und eine Fertigschneide 54 angeordnet, wobei im Unterschied zu den vorbeschriebenen Ausführungsformen die Schruppschneiden 50 und die Zwischenschneide 52 ebenfalls in Radialrichtung zustellbar sind. Die Lagerung der Schruppschneiden 50 und der Zwischenschneide 52 auf Biegeklemmhaltern 20 sowie die radiale Auslenkung der Biegeklemmhalter 20 mittels in Radialrichtung verschiebbarer Stifte 22 erfolgt entsprechend der radialen Zustellbarkeit der Fertigschneiden 18, 54 in den vorbeschriebenen Ausführungsbeispielen. Jedoch stützen sich die Stifte 22 nicht auf einer Steuerfläche 24, sondern auf einem Polygonabschnitt 56 der Innenwelle 26 ab. Vorteilhaft an dem Polygonabschnitt 56 ist, daß aufgrund seiner Symmetrie keine Unwucht an der Innenwelle 26 erzeugt wird. Ferner läßt sich ein Polygonabschnitt 56 einacher fertigen als eine Steuerfläche 24. Die Schneiden 50, 52, 54 befinden sich auf einem Auswechselstück 46 in einem derartigen Axialabstand von der Kupplung 10, daß entsprechend der Anordnung der Schneiden 14, 16, 18 auf der Bohrstange 8 zwei Lagerabschnitte 4 ohne Einfahren der Schneiden 50, 52, 54 in die Lagergasse 6 durchfahren werden können. Die Schneiden 50, 52, 54 sind dabei so ausgerichtet, daß eine Bearbeitung der Lagerbschnitte 4 nur beim Heraus- bzw. Zurückfahren der zweiten Bohrstange 12 gemäß der Figur 3 nach links aus der Lagergasse 6 erfolgen kann. D. h. von der Kupplung 10 aus betrachtet ist die Fertigschneide 54 vor der Zwischenschneide 52 und der Schruppschneide 50 ausgebildet.

Die Bearbeitung beginnt mit dem Einfahren der zweiten Bohrstange 12 in die Lagergasse 6 bis die Kupplung 10 mit der gegenüberliegenden Seite der Lagergasse 6 fluchtend abschließt. Aufgrund ihres Axialabstands von der Kupplung 10 haben die Schneiden 50, 52, 54 die Lagerabschnitte 4a, 4b, 4c durchfahren. Da die Schneiden 50, 52, 54 jedoch eingesteuert sind, ist noch kein Spanabtrag erfolgt. Die erste Bohrstange 8 koppelt an die zweite Bohrstange 12 an und die Antriebe werden synchronisiert. Die Schneiden 18, 50, 52, 54 werden entsprechend den Erläuterungen zu den Figuren 1 und 2 durch eine kurzzeitige Drehzahldifferenz der Innenspindel 32 zur Außenspindel 34 ausgesteuert und die Bohrstange 12 aus- bzw. die erste Bohrstange 8 in die Lagergasse 6 gefahren. Dabei wird zuerst der mittlere Lagerabschnitte 4c durch die Schneiden 50, 52, 54 der zweiten Bohrstange 12 und anschließend die Lagerabschnitte 4b, 4a zeitgleich mit den Lagerabschnitten 4d, 4e durch die Schneiden 50, 52, 54 bzw. 14, 16, 18 bearbeitet. Nach und während der zeitgleichen Bearbeitung der Lagerabschnitte 4a und 4d, gelangen die zusätzlichen Werkzeugschneiden 40, 42 in Eingriff, so daß die Ringschulter 44 und die Fase 45 ausgebildet wird. Sobald sämtliche Lagerabschnitte 4 endbearbeitet wurden, werden die Schneiden 18, 50, 52, 54 eingesteuert, die Kupplung 10 gelöst und die zweite Bohrstange 12 wird gemäß der Darstellung in Figur 3 nach rechts aus der Lagergasse 6 herausgefahren - ein neuer Bearbeitungszyklus kann beginnen.

Wie bereits in dem vorbeschriebenen Ausführungsbeispiel gemäß Figur 2 erläutert, dient die Bearbeitung der Lagergasse 6 durch zwei Bohrstangen 8, 12 der Reduzierung der Taktzeit. Das Verfahren eignet sich daher besonders für Werkstoffe, die aufgrund ihrer Eigenschaften keine hohe Schnittgeschwindigkeit ermöglichen. Besonders empfiehlt sich diese Variante mit je einer Zwischenschneide 16, 52 auf den Bohrstangen 8, 12 für schwerspanbare Werkstoffe, die mit geringen Schnitttiefen bearbeitet werden. Folglich läßt sich entsprechend den Ausführungen zu Figur 2 die Verfügbarkeit einer derartigen Bohrstangeneinheit 2 durch die Reduzierung der Schneidenwechselintervalle erhöhen.

Bohrstangeneinheit zum Bearbeiten von axial hintereinander angeordneten Bohrungen bzw. Lagerabschnitten mit einer ersten Bohrstange, die mit einer zweiten Bohrstange koppelbar ist, und mindestens auf einer der Bohrstangen drei Schneiden axial hintereinander angeordnet sind, wobei die Spantiefe der mittleren Schneide zwischen der der äußeren Schneiden liegt, sowie Verfahren zur Ansteuerung der Bohrstangeneinheit.

### Bezugszeichenliste

- 2: Bohrstangeneinheit
- 4: Lagerabschnitt
- 4a: Lagerabschnitt
- 4b: Lagerabschnitt
- 4c: Lagerabschnitt
- 4d: Lagerabschnitt
- 4e: Lagerabschnitt
- 6: Lagergasse
- 8: erste Bohrstange
- 10: Kupplung
- 12: zweite Bohrstange
- 14: Schruppschneide
- 14a: Schruppschneide
- 14b: Schruppschneide
- 14c: Schruppschneide
- 14d: Schruppschneide
- 14e: Schruppschneide
- 14f: Schruppschneide
- 16: Zwischenschneide
- 18: Fertigschneide
- 20: Biegeklemmhalter
- 22: Stift
- 24: Steuerfläche
- 26: Innenwelle
- 28: Axialbohrung
- 30: Kupplungseinrichtung
- 32: Innenspindel
- 34: Außenspindel
- 36: Bund
- 38: nabenförmiger Abschnitt
- 40: Werkzeugschneide
- 42: Werkzeugschneide
- 44: Ringschulter
- 46: Auswechselstück
- 48: Aufnahme
- 50: Schruppschneide
- 52: Zwischenschneide
- 54: Fertigschneide
- 56: Polygonabschnitt

## Patentansprüche

1. Bohrstangeneinheit (2) zum Bearbeiten von axial hintereinander liegenden Bohrungen bzw. Lagerabschnitten (4) mit einer Bohrstange (8), die mit einer zweiten Bohrstange (12) koppelbar ist, wobei zumindest eine der Bohrstangen (8, 12) mit mindestens einer Schruppschneide (14, 50) und einer Fertigschneide (18, 54) versehen ist, **dadurch gekennzeichnet, daß** zwischen der Schruppschneide (14, 50) und der Fertigschneide (18, 54) mindestens eine Zwischenschneide (16, 52) angeordnet ist, deren Spantiefe zwischen derjenigen der Schruppschneide (14, 50) und der Fertigschneide (18, 54) liegt.

2. Bohrstangeneinheit nach Patentanspruch 1, **dadurch gekennzeichnet, daß** die zweite Bohrstange (12) über einen eigenen Antrieb verfügt.

3. Bohrstangeneinheit nach Patentanspruch 2, **dadurch gekennzeichnet, daß** die zweite Bohrstange (12) mindestens eine Schruppschneide (50) und Fertigschneide (54) trägt, zwischen denen vorzugsweise mindestens eine Zwischenschneide (52) angeordnet ist.

4. Bohrstangeneinheit nach einem der vorhergehenden Patentansprüche, **dadurch gekennzeichnet, daß** die Fertigschneiden (18, 54) der beiden Bohrstangen (8, 12) in Radialrichtung zustellbar sind.

5. Bohrstangeneinheit nach einem der vorhergehenden Patentansprüche, **dadurch gekennzeichnet, daß** die Schruppschneiden (14, 50) und/oder Zwischenschneiden (16, 52) der beiden Bohrstangen (8, 12) in Radialrichtung zustellbar sind.

6. Bohrstangeneinheit nach einem der Patentansprüche 4 oder 5, **dadurch gekennzeichnet, daß** die in Radialrichtung zustellbaren Schneiden (18, 50, 52, 54) auf Biegeklemmhaltern (20) gelagert sind, die an dem Außenumfang der Bohrstange (8, 12) befestigt sind und deren Radialposition durch Drehzahldifferenz einer Innenwelle (26), die in einer Axialbohrung (28) der Bohrstange (8, 12) geführten wird, zur Bohrstange (8, 12) einstellbar ist.

7. Bohrstangeneinheit nach einem der vorhergehenden Patentansprüche, **dadurch gekennzeichnet, daß** die Zwischenschneide (16, 52) axial in einem geringeren Abstand an der Fertigschneide (18, 54) angeordnet ist als an der Schruppschneide (14, 50).

8. Bohrstangeneinheit nach Patentanspruch 7, **dadurch gekennzeichnet, daß** die Zwischenschneide (16, 52) und die Fertigschneide (18, 54) etwa auf dem gleichen Umfangsabschnitt angeordnet sind, wobei der axiale Abstand 0,5 mm beträgt.

9. Bohrstangeneinheit nach einem der vorhergehenden Patentansprüche, **dadurch gekennzeichnet, daß** die Spantiefe zwischen der Zwischenschneide (16, 52) und der Schruppschneide (14, 50) größer ist als die Spantiefe zwischen der Fertigschneide (18, 54) und der Zwischenschneide (16, 52).

10. Bohrstangeneinheit nach Patentanspruch 9, **dadurch gekennzeichnet, daß** die Spantiefe zwischen der Zwischenschneide (16, 52) und der Schruppschneide (14, 50) 0,1 mm bis 0,125 mm beträgt.

11. Bohrstangeneinheit nach Patentanspruch 10, **dadurch gekennzeichnet, daß** die Spantiefe zwischen der Fertigschneide (18, 54) und der Zwischenschneide (16, 52) vorzugsweise 0,025 mm bis 0,05 mm beträgt.

12. Bohrstangeneinheit nach einem der vorhergehenden Patentansprüche, **dadurch gekennzeichnet, daß** vorzugsweise vier oder sechs Schruppschneiden (14, 50) auf den Bohrstangen (8, 12) ausgebildet sind.

13. Bohrstangeneinheit nach einem der vorhergehenden Patentansprüche, **dadurch gekennzeichnet, daß** die Schruppschneide (14, 50) in einem axialen Abstand zu einer Kupplung (10) angeordnet ist, der mindestens dem Abstand von zwei Lagerabschnitten (4) entspricht.

14. Bohrstangeneinheit nach einem der vorhergehenden Patentansprüche, **dadurch gekennzeichnet, daß** die Innenwelle (26) über einen Polygonabschnitt (56) auf die Schruppschneide (50) und Zwischenschneide (52) und über eine Steuerfläche (24) auf die Fertigschneide (54) wirkt.

15. Bohrstangeneinheit nach einem der vorhergehenden Patentansprüche, **dadurch gekennzeichnet, daß** die eine Bohrstange (8, 12) einen radial erweiterten Bund (36) hat, an dem mindestens eine Werkzeugschneide (40, 42) zur Ausbildung einer Ringschulter (44) oder einer Fase (45) befestigt ist.

16. Verfahren zum Ansteuern einer Bohrstangeneinheit (2) mit einer Bohrstange (8, 12), auf der zumindest eine Schruppschneide (14), Zwischenschneide (16) und Fertigschneide (18) angeordnet sind, wobei die Fertigschneide (18) radial zustellbar ist, und die mit einer zweiten Bohrstange (12), die an die erste Bohrstange (8) koppelbar ist und mit der eine Vielzahl von axial hintereinanderliegenden Bohrungen bzw. Lagerabschnitten (4) bearbeitbar sind, mit den Schritten:
• Einfahren der zweiten Bohrstange (12) in die Lagerabschnitte (4) und Ankoppeln an die erste Bohrstange (8).
• Zurückfahren der zweiten Bohrstange (12) und entsprechendes Mitführen der ersten Bohrstange (8), wodurch die Bearbeitung (Schruppen, Vorschlichten, Endschlichten) der Lagerabschnitte (4) durch die Schneiden (14, 16, 18) der ersten Bohrstange (8) erfolgt.
• Entkoppeln und Einsteuern der Fertiggschneide (18) der ersten Bohrstange (8).
• Ausfahren der ersten Bohrstange (8).

17. Verfahren zum Ansteuern einer Bohrstangeneinheit (2) mit einer Bohrstange (8), auf der zumindest eine Schruppschneide (14) und Fertigschneide (18) angeordnet sind, und mit einer zweiten Bohrstange (12), auf der zumindest eine Schruppschneide (50), Zwischenschneide (52) und Fertigschneide (54) angeordnet sind, und die an die erste Bohrstange (8) ankoppelbar ist, wobei die Fertigschneiden (18, 54) beider Bohrstangen (8, 12) radial zustellbar sind, und mit der eine Vielzahl von axial hintereinanderliegenden Bohrungen bzw. Lagerabschnitten (4) bearbeitbar sind, mit den Schritten:
• Einfahren der ersten Bohrstange (8) mit eingesteuerter Fertigschneiden (18) in einige der Lagerabschnitte (4), so daß eine fliegende Vorbearbeitung (Schruppen) dieser Lagerabschnitte (4) erfolgt.
• Einfahren der zweiten Bohrstange (12) und ankoppeln an die ersten Bohrstange (8), wobei sich die Schneiden (48, 50, 52) der zweiten Bohrstange (12) außerhalb der Lagerabschnitte (4) befinden.
• Aussteuern der Fertigschneiden (18, 54) der beiden Bohrstangen (8, 12).
• Zurückfahren der ersten Bohrstange (8), so daß die weitere Bearbeitung (Endschlichten) der bereits fliegend geschruppten Lagerabschnitte (4) durch die erste Bohrstange (8) erfolgt, wobei gleichzeitig durch die entsprechende Mitnahme der zweiten Bohrstange (12) die Bearbeitung (Schruppen, Vorschlichten, Endschlichten) der übrigen Lagerabschnitte (4) stattfindet.
• Entkoppeln und Einsteuern der Fertigschneiden der beiden Bohrstangen (8, 12)
• Ausfahren der zweiten Bohrstange (12).

18. Verfahren zum Ansteuern einer Bohrstangeneinheit (2) mit einer Bohrstange (8), auf der zumindest eine Schruppschneide (14), Zwischenschneide (16) und Fertigschneide (18) angeordnet sind, wobei die Fertigschneide (18) radial zustellbar ist, und einer zweiten Bohrstange (12), auf der zumindest eine Schruppschneide (50), Zwischenschneide (52) und eine Fertigschneide (54) angeordnet sind, wobei die Schneiden (50, 52, 54) radial einstellbar sind, und die an die erste Bohrstange (8) ankoppelbar ist, und mit der eine Vielzahl von axial hintereinanderliegenden Bohrungen bzw. Lagerabschnitten (4) bearbeitbar sind, mit den Schritten:
• Einfahren der zweiten Bohrstange (12) mit eingesteuerten Schneiden (50, 52, 54) in einige der Lagerabschnitte (4).
• Ankoppeln der ersten Bohrstange (8) an die zweite Bohrstange (12).
• Aussteuern der Schneiden (50, 52, 54) der zweiten Bohrstange (12) sowie der Fertigschneide (18) der ersten Bohrstange (8).
• Zurückfahren der zweiten Bohrstange (12) und entsprechendes Mitführen der ersten Bohrstange (8), so daß die Bearbeitung (Schruppen, Vorschlichten, Endschlichten) der Lagerabschnitte (4) erfolgt.
• Entkoppeln der ersten Bohrstange und einsteuern der Schneiden (18, 50, 5, 54) der beiden Bohrstangen (8, 12).
• Ausfahren der ersten Bohrstange (8).

## Claims

1. Boring bar unit (2) for machining bores or bearing sections (4) lying axially one behind another, comprising a boring bar (8) which can be coupled to a second boring bar (12), at least one of the boring bars (8, 12) being provided with at least one roughing cutter (14, 50) and one finishing cutter (18, 54), **characterised in that** there is arranged between the roughing cutter (14, 50) and the finishing cutter (18, 54) at least one intermediate cutter (16, 52) the cutting depth of which is between that of the roughing cutter (14, 50) and that of the finishing cutter (18, 54).

2. Boring bar unit according to patent claim 1, **characterised in that** the second boring bar (12) has its own drive.

3. Boring bar unit according to patent claim 2, **characterised in that** the second boring bar (12) carries at least one roughing cutter (50) and finishing cutter (54) between which preferably at least one intermediate cutter (52) is arranged.

4. Boring bar unit according to any one of the preceding patent claims, **characterised in that** the finishing cutters (18, 54) of the two boring bars (8, 12) can be advanced in the radial direction.

5. Boring bar unit according to any one of the preceding patent claims, **characterised in that** the roughing cutters (14, 50) and/or intermediate cutters (16, 52) of the two boring bars (8, 12) can be advanced in the radial direction.

6. Boring bar unit according to patent claim 4 or patent claim 5, **characterised in that** the cutters (18, 50, 52, 54) that can be advanced in the radial direction are mounted on bending clamps (20) which are fastened to the outer circumference of the boring bar (8, 12) and the radial position of which is adjustable by a difference in speed of an inner shaft (26), which is guided in an axial bore (28) of the boring bar (8, 12), with respect to the boring bar (8, 12).

7. Boring bar unit according to any one of the preceding patent claims, **characterised in that** the intermediate cutter (16, 52) is axially arranged at a smaller spacing from the finishing cutter (18, 54) than it is from the roughing cutter (14, 50).

8. Boring bar unit according to patent claim 7, **characterised in that** the intermediate cutter (16, 52) and the finishing cutter (18, 54) are arranged approximately on the same circumferential portion, the axial spacing being 0.5 mm.

9. Boring bar unit according to any one of the preceding patent claims, **characterised in that** the cutting depth between the intermediate cutter (16, 52) and the roughing cutter (14, 50) is greater than the cutting depth between the finishing cutter (18, 54) and the intermediate cutter (16, 52).

10. Boring bar unit according to patent claim 9, **characterised in that** the cutting depth between the intermediate cutter (16, 52) and the roughing cutter (14, 50) is from 0.1 mm to 0.125 mm.

11. Boring bar unit according to patent claim 10, **characterised in that** the cutting depth between the finishing cutter (18, 54) and the intermediate cutter (16, 52) is preferably from 0.025 mm to 0.05 mm.

12. Boring bar unit according to any one of the preceding patent claims, **characterised in that** preferably four or six roughing blades (14, 50) are constructed on the boring bars (8, 12).

13. Boring bar unit according to any one of the preceding patent claims, **characterised in that** the roughing cutter (14, 50) is arranged at an axial distance from a coupling (10) that corresponds to at least the distance between two bearing sections (4).

14. Boring bar unit according to any one of the preceding patent claims, **characterised in that** the inner shaft (26) acts on the roughing cutter (50) and intermediate cutter (52) by way of a polygonal portion (56) and on the finishing cutter (54) by way of a control surface (24).

15. Boring bar unit according to any one of the preceding patent claims, **characterised in that** one boring bar (8, 12) has a radially widened collar (36) to which at least one cutting tool edge (40, 42) for forming an annular shoulder (44) or a chamfer (45) is fastened.

16. Method for operating a boring bar unit (2) comprising a boring bar (8, 12) on which at least one roughing cutter (14), intermediate cutter (16) and finishing cutter (18) are arranged, wherein the finishing cutter (18) can be advanced radially, and comprising a second boring bar (12) which can be coupled to the first boring bar (8), and with which a plurality of bores or bearing sections (4) lying one behind another can be machined, comprising the steps of:
• driving the second boring bar (12) into the bearing sections (4) and coupling it to the first boring bar (8).
• driving the second boring bar (12) back and accordingly entraining the first boring bar (8), whereby the machining (roughing, preliminary smoothing and final smoothing) of the bearing sections (4) is effected by the cutters (14, 16, 18) of the first boring bar (8).
• uncoupling and retracting the finishing cutters (18) of the first boring bar (8).
• withdrawing the first boring bar (8).

17. Method for operating a boring bar unit (2) comprising a boring bar (8) on which at least one roughing cutter (14) and finishing cutter (18) are arranged, and comprising a second boring bar (12) on which at least one roughing cutter (50), intermediate cutter (52) and finishing cutter (54) are arranged and which can be coupled to the first boring bar (8), wherein the finishing cutters (18, 54) of both boring bars (8, 12) can be advanced radially, and with which a plurality of bores or bearing sections (4) lying axially one behind another can be machined, comprising the steps of:
• driving the first boring bar (8), with the finishing cutters (18) retracted, into some of the bearing sections (4) so that floating pre-machining (roughing) of those bearing sections (4) is effected.
• driving in the second boring bar (12) and coupling it to the first boring bar (8), the cutters (48, 50, 52) of the second boring bar (12) being outside the bearing sections (4).
• deploying the finishing cutters (18, 54) of the two boring bars (8, 12).
• driving the first boring bar (8) back so that the further machining (final smoothing) of the bearing sections (4) that have already been roughed in floating manner is effected by the first boring bar (8) whilst at the same time, as a result of the second boring bar (12) being accordingly entrained, the machining (roughing, preliminary smoothing, final smoothing) of the remaining bearing sections (4) takes place.
• uncoupling and retracting the finishing cutters of the two boring bars (8, 12)
• withdrawing the second boring bar (12).

18. Method for operating a boring bar unit (2) comprising a boring bar (8) on which at least one roughing cutter (14), intermediate cutter (16) and finishing cutter (18) are arranged, wherein the finishing cutter (18) can be advanced radially, and comprising a second boring bar (12) on which at least one roughing cutter (50), intermediate cutter (52) and finishing cutter (54) are arranged, wherein the cutters (50, 52, 54) are radially adjustable, and which can be coupled to the first boring bar (8), and with which a plurality of bores or bearing sections (4) lying axially one behind another can be machined, comprising the steps of:
• driving the second boring bar (12), with the cutters (50, 52, 54) retracted, into some of the bearing sections (4).
• coupling the first boring bar (8) to the second boring bar (12).
• deploying the cutters (50, 52, 54) of the second boring bar (12) and also the finishing cutter (18) of the first boring bar (8).
• driving the second boring bar (12) back and accordingly entraining the first boring bar (8) so that the machining (roughing, preliminary smoothing, final smoothing) of the bearing sections (4) is effected.
• uncoupling the first boring bar and retracting the cutters (18, 50, 5, 54) of the two boring bars (8, 12).
• withdrawing the first boring bar (8).

## Revendications

1. Ensemble de tiges porte-forets (2) pour traiter des alésages ou sections de palier (4) situées axialement les unes derrière les autres, comprenant une tige porte-forets (8) pouvant être accouplée à une deuxième tige porte-forets (12), au moins l'une des tiges porte-forets (8, 12) étant munie d'un taillant de dégrossissage (14, 50) et d'un taillant de finition (18, 54), **caractérisé en ce qu'**entre le taillant de dégrossissage (14, 50) et le taillant de finition (18, 54) au moins un taillant intermédiaire (16, 52) est disposé, dont la profondeur de coupe est comprise entre celle du taillant de dégrossissage (14, 50) et du taillant de finition (18, 54).

2. Ensemble de tiges porte-forets selon la revendication 1, **caractérisé en ce que** la deuxième tige porte-forets (12) dispose de son propre entraînement.

3. Ensembles de tiges porte-forets selon la revendication 2, **caractérisé en ce que** la deuxième tige porte-forets (12) porte au moins un taillant de dégrossissage (50) et un taillant de finition (54) entre lesquels est disposé de préférence au moins un taillant intermédiaire (52).

4. Ensemble de tiges porte-forets selon l'une quelconque des revendications précédentes, **caractérisé en ce que** les taillants de finition (18, 54) des deux tiges porte-forets (8, 12) peuvent s'approcher dans le sens radial.

5. Ensemble de tiges porte-forets selon l'une quelconque des revendications précédentes, **caractérisé en ce que** les taillants de dégrossissage (14, 50) et/ou les taillants intermédiaires (16, 52) des deux tiges porte-forets (8, 12) peuvent s'approcher dans le sens radial.

6. Ensemble de tiges porte-forets selon l'une des revendications 4 ou 5, **caractérisé en ce que** les taillants (18, 50, 52, 54) pouvant s'approcher dans le sens radial sont logés sur des supports de pinces cintrées (20) qui sont fixés à la périphérie extérieure de la tige porte-forets (8, 12) et dont la position radiale par rapport à la tige porte-forets (8, 12) peut être réglée par différence de vitesse de rotation d'un arbre intérieur (26) guidé dans un perçage axial (28) de la tige porte-forets (8, 12).

7. Ensemble de tiges porte-forets selon l'une quelconque des revendications précédentes, **caractérisé en ce que** le taillant intermédiaire (16, 52) est axialement disposé sur le taillant de finition (18, 54) à une distance plus réduite que sur le taillant de dégrossissage (14, 50).

8. Ensemble de tiges porte-forets selon la revendication 7, **caractérisé en ce que** le taillant intermédiaire (16, 52) et le taillant de finition (18, 54) sont disposés sensiblement sur la même section périphérique, la distance axiale étant de 0,5 mm.

9. Ensemble de tiges porte-forets selon l'une quelconque des revendications précédentes, **caractérisé en ce que** la profondeur de coupe entre le taillant intermédiaire (16, 52) et le taillant de dégrossissage (14, 50) est supérieure à la profondeur de coupe entre le taillant de finition (18, 54) et le taillant intermédiaire (16, 52).

10. Ensemble de tiges porte-forets selon la revendication 9, **caractérisé en ce que** la profondeur de coupe entre le taillant intermédiaire (16, 52) et le taillant de dégrossissage (14, 50) est comprise entre 0,1 mm et 0,125 mm.

11. Ensemble de tiges porte-forets selon la revendication 10, **caractérisé en ce que** la profondeur de coupe entre le taillant de finition (18, 54) et le taillant intermédiaire (16, 52) est de préférence comprise entre 0,025 mm et 0,05 mm.

12. Ensemble de tiges porte-forets selon l'une quelconque des revendications précédentes, **caractérisé en ce que** de préférence quatre ou six taillants de dégrossissage (14, 50) sont prévus sur les tiges porte-forets (8, 12).

13. Ensemble de tiges porte-forets selon l'une quelconque des revendications précédentes, **caractérisé en ce que** le taillant de dégrossissage (14, 50) est disposé à une distance axiale d'un couplage (10), qui correspond au moins à la distance entre deux sections de palier (4).

14. Ensemble de tiges porte-forets selon l'une quelconque des revendications précédentes, **caractérisé en ce que** l'arbre intérieur (26) agit par une section polygonale (56) sur le taillant de dégrossissage (50) et le taillant intermédiaire (52) et par une surface de commande (24) sur le taillant de finition (54).

15. Ensemble de tiges porte-forets selon l'une quelconque des revendications précédentes, **caractérisé en ce que** l'une des tiges porte-forets (8, 12) présente un collet (36) radialement évasé, auquel est fixé au moins un taillant d'outil (40, 42) pour former un épaulement annulaire (44) ou un chanfrein (45).

16. Procédé de commande d'un ensemble de tiges porte-forets (2) comprenant une tige porte-forets (8, 12) sur laquelle sont disposés au moins un taillant de dégrossissage (14), un taillant intermédiaire (16) et un taillant de finition (18), le taillant de finition (18) pouvant être approché radialement, et comprenant une deuxième tige porte-forets (12) pouvant être accouplée à la première tige porte-forets (8) et permettant de traiter une multitude d'alésages ou de sections de palier (4) disposées axialement les unes derrière les autres, avec les étapes :
. avance de la deuxième tige porte-forets (12) dans les sections de palier (4) et accouplement à la première tige porte-forets (8) ;
. retrait de la deuxième tige porte-forets (12) et entraînement correspondant de la première tige porte-forets (8), permettant le traitement (dégrossissage, finissage préalable, finissage terminal) des sections de palier (4) par les taillants (14, 16, 18) de la première tige porte-forets (8) ;
. découplage et mise en place du taillant de finition (18) de la première tige porte-forets (8) ;
. sortie de la première tige porte-forets (8).

17. Procédé de commande d'un ensemble de tiges porte-forets (2) comprenant une tige porte-forets (8) sur laquelle sont disposés au moins un taillant de dégrossissage (14) et un taillant de finition (18), et comprenant une deuxième tige porte-forets (12) sur laquelle sont disposés au moins un taillant de dégrossissage (50), un taillant intermédiaire (52) et un taillant de finition (54), et qui peut être accouplée à la première tige porte-forets (8), les taillants de finition (18, 54) des deux tiges porte-forets (8, 12) pouvant s'approcher radialement, et par laquelle une multitude d'alésages ou de sections de palier (4) situées les unes derrière les autres peut être traitée, comprenant les étapes suivantes :
avance de la première tige porte-forets (8) avec des taillants de finition (18) mises en place dans quelques-unes des sections de palier (4), pour permettre un prétraitement volant (dégrossissage) de ces sections de palier (4) ;
. avance de la deuxième tige porte-forets (12) et accouplement à la première tige porte-forets (8), les taillants (48, 50, 52) de la deuxième tige porte-forets (12) se trouvant à l'extérieur des sections de palier (4) ;
. retour des taillants de finition (18, 54) des deux tiges porte-forets (8, 12) ;
. retrait de la première tige porte-forets (8) pour permettre le traitement suivant (finissage terminal) par la première tige porte-forets (8) des sections de palier (4) déjà dégrossies de manière volante, le traitement (dégrossissage, finissage préalable, finissage terminal) des autres sections de palier étant réalisé en même temps pour l'entraînement correspondant de la deuxième tige porte-forets (12) ;
. découplage et mise en place des taillants de finition des deux tiges porte-forets (8, 12) ;
. sortie de la deuxième tige porte-forets (12).

18. Procédé de commande d'un ensemble de tiges porte-forets (2) comprenant une tige porte-forets (8) sur laquelle sont disposés au moins un taillant de dégrossissage (14), un taillant intermédiaire (16) et un taillant de finition (18), le taillant de finition (18) pouvant s'approcher radialement, et comprenant une deuxième tige porte-forets (12) sur laquelle sont disposés au moins un taillant de dégrossissage (50), un taillant intermédiaire (52) et un taillant de finition (54), les taillants (50, 52, 54) pouvant être réglés radialement, et qui peut être accouplée à la première tige porte-forets (8), et qui permet de traiter une multitude d'alésages ou de sections de palier (4) disposées les unes derrière les autres, comprenant les étapes :
. avance de la deuxième tige porte-forets (12) avec des taillants (50, 52, 54) mises en place dans quelques-unes des sections de palier (4) ;
. accouplement de la première tige porte-forets (8) à la deuxième tige porte-forets (12) ;
. retour des taillants (50, 52, 54) de la deuxième tige porte-forets (12) ainsi que du taillant de finition (18) de la première tige porte-forets (8) ;
. retrait de la deuxième tige porte-forets (12) et entraînement correspondant de la première tige porte-forets (8) permettant le traitement (dégrossissage, finissage préalable, finissage terminal) des sections de palier (4) ;
. découplage de la première tige porte-forets et mise en place des taillants (18, 50, 52, 54) des deux tiges porte-forets (8, 12) ;
. sortie de la première tige porte-forets (8).
